# DEMANDE DE BREVET EUROPEEN

(11) **EP 0 803 452 A1**
(43) Date de publication de la demande: **29.10.1997**
(21) Numéro de dépôt: 97400870.8
(22) Date de dépôt: 17.04.1997
(51) Int. Cl.: B65G 1/08, B65G 1/137

(54) **Système de stockage et de distribution d'objets de formes et de dimensions variées**

(30) Priorité: 26.04.1996 FR 9605396
(71) Demandeur: FLUIDELEC, 78532 Buc Cedex (FR)
(72) Inventeur: Douard, Pierre-René, 78960 Voisins le Bretonneux (FR)
(74) Mandataire: de Saint-Palais, Arnaud Marie

(57) **Abrégé**

Le système selon l'invention fait intervenir une unité de stockage (1) comprenant des cellules de stockage (C₁₁, Cₙₘ) dans lesquelles les objets peuvent être superposés, ces cellules (Cₙₘ) étant ouvertes dans leur partie supérieure et équipées chacune, dans leur partie inférieure, d'un distributeur un à un commandable à distance. Une unité de transfert (T₁) qui s'étend en dessous de l'unité de stockage (1) comprend un chariot (CT₁) mobile selon deux axes perpendiculaires de manière à pouvoir se placer sous chacune des cellules de stockage (C₁₁, Cₙₘ) et en regard d'un dispositif de transport (TR₁, TR₂) destiné à acheminer les objets jusqu'à un destinataire.

L'invention s'applique notamment au stockage et à la distribution de médicaments.

## Description

La présente invention concerne un système de stockage et de distribution d'objets pouvant présenter des formes et des dimensions variées.

Elle s'applique notamment, mais non exclusivement, à la gestion des stocks et à la distribution de médicaments dans des officines pharmaceutiques et dans des pharmacies hospitalières.

Dans ce type d'application, elle a plus particulièrement pour but :
- de réduire le volume nécessaire au stockage, notamment en supprimant en grande partie les passages permettant au personnel d'accéder aux médicaments entreposés,
- de réduire le temps nécessaire pour chercher le médicament sur le lieu de stockage et le donner au client,
- de réduire le personnel nécessaire à la distribution des médicaments, et en permettant à ce personnel de demeurer en présence du destinataire du médicament, ce qui est particulièrement important dans une officine où le pharmacien ou le préparateur est amené à s'absenter du comptoir ou de la caisse de la pharmacie,
- de supprimer toute possibilité de vol de médicaments,
- d'assurer une gestion informatisée des stocks avec contrôle permanent de l'état des stocks et vérification avec l'état indiqué sur les registres.

Ces objectifs à atteindre sont particulièrement importants dans les officines dans lesquelles on constate une tendance à la recherche d'espace pour présenter des produits à forte marge, en particulier des produits parapharmaceutiques et, inversement, une réduction de l'espace affecté aux médicaments.

En pharmacie hospitalière, l'objectif est de permettre une gestion des médicaments en temps réel et flux tendu, avec possibilité d'effectuer un stockage préalable des médicaments, par unité de temps, par malades, par salles de soins, etc..., de manière à pouvoir préparer à l'avance l'approvisionnement de salles de soins et permettre la délivrance des unités de soins en temps réel, éventuellement la nuit, durant les congés de fin de semaine ou les jours fériés.

En vue d'atteindre ces objectifs, l'invention propose un système de stockage et de distribution d'objets faisant intervenir :
- une unité de stockage comprenant une pluralité de cellules verticales servant de silos de stockage, dans lesquelles les objets, par exemple les médicaments, peuvent être superposés, ces cellules étant ouvertes dans leur partie supérieure et équipées chacune, dans leur partie inférieure, d'un système de distribution un à un commandable à distance,
- une unité de transfert qui s'étend dans un volume situé en dessous de l'unité de stockage et qui comprend un chariot mobile horizontalement selon deux axes perpendiculaires de manière à pouvoir se placer sous chacune des cellules de stockage, et dans une position de transfert, en regard d'un dispositif de transport destiné à acheminer les objets jusqu'à un destinataire,
- des moyens permettant de commander l'actionnement du système de distribution associé à une cellule, lorsque le chariot est placé au-dessous de cette cellule, de manière à pouvoir provoquer la chute d'un objet contenu dans cette cellule dans ledit chariot,
- des moyens permettant de transférer l'objet porté par le chariot sur ou dans le susdit dispositif de transport lorsque ledit chariot se trouve en position de transfert, à proximité dudit dispositif.

Avantageusement, les moyens permettant de commander l'actionnement des systèmes de distribution associés aux cellules seront portés par le chariot, lequel pourra également comprendre des moyens de transfert des objets sur ou dans le dispositif de transport.

Par ailleurs, le système selon l'invention pourra comprendre pour le chargement des cellules, un chargeur qui s'étend dans un volume situé au-dessus de l'unité de stockage et qui comprend un chariot mobile horizontalement de manière à pouvoir se placer au-dessus de chacune des cellules de stockage, ce chariot comportant des moyens permettant de transférer l'objet transporté par le chariot dans une cellule déterminée.

Bien entendu, le fonctionnement du système selon l'invention pourra être automatisé et être géré par ordinateur. Dans ce cas, les objets à stocker et à distribuer pourront être munis de moyens d'identification, détectables à distance au moyen de lecteurs couplés à l'ordinateur.

Un mode d'exécution du système selon l'invention sera décrit ci-après, à titre d'exemple non limitatif, avec référence aux dessins annexés dans lesquels :
La figure 1 est une vue en perspective schématique d'un appareil de stockage et de distribution utilisable dans le système selon l'invention ;
Les figures 2, 3, 4 sont des vues en perspective schématique de différents objets conditionnés en vue de leur transfert par un tube pneumatique de section rectangulaire ;
La figure 5 est une vue arrière, en perspective, d'un élément support servant à conditionner les objets ;
La figure 6 est une vue en perspective d'une cellule servant de silo des moyens de stockage de l'appareil représenté figure 1 ;
Les figures 7 et 8 sont des vues schématiques illustrant le principe d'un distributeur "un à un" d'objets de formes et de dimensions variables, munis du conditionnement de la figure 2 ;
La figure 9 est une coupe axiale schématique d'un godet, du dispositif de transport de l'appareil représenté figure 1 ;
La figure 10 est une vue en perspective schématique d'un conduit tubulaire d'un dispositif de transport pneumatique.

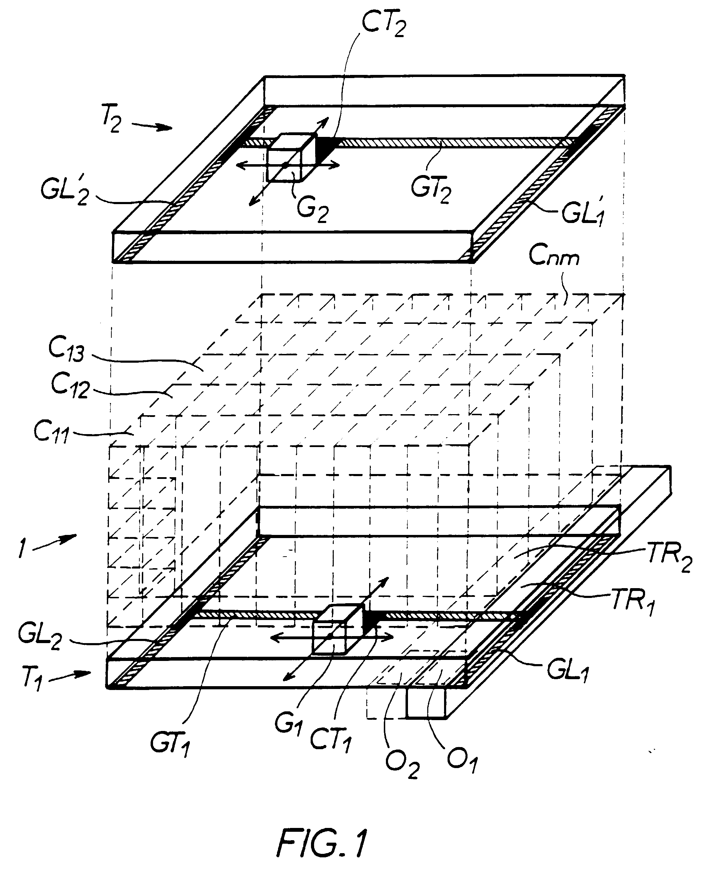

Dans l'exemple représenté sur la figure 1, l'appareil de stockage et de distribution comprend une unité de stockage 1 de forme parallélépipédique, réalisée par exemple en fils d'acier.

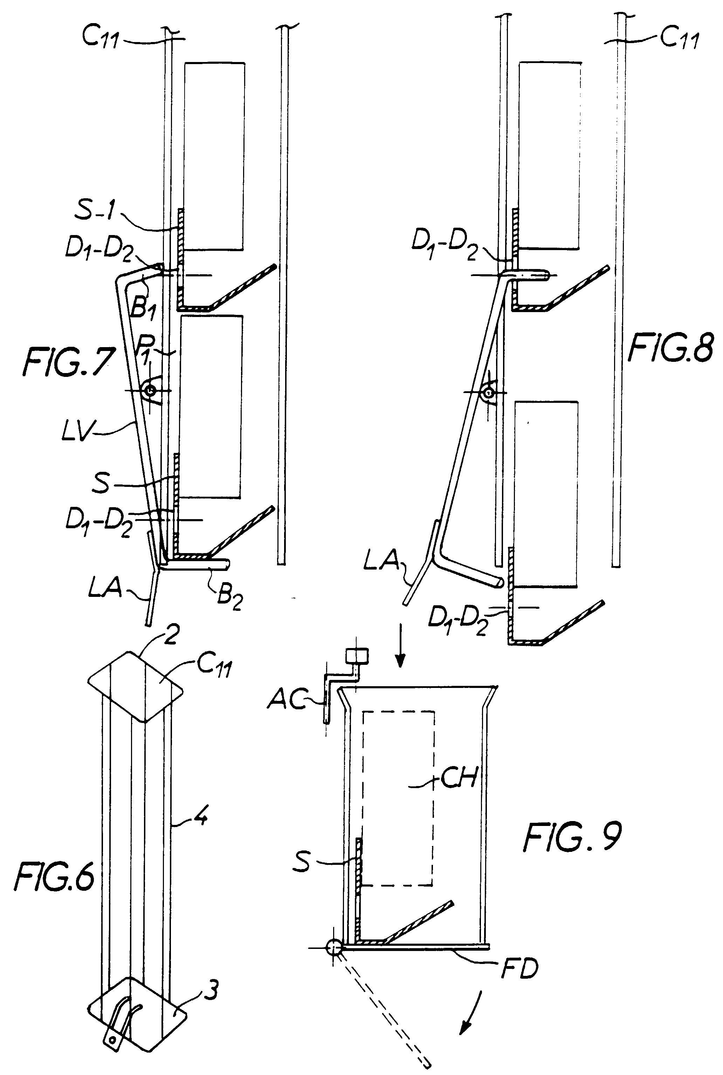

Cette unité de stockage comprend une pluralité de. cellules de stockage C₁₁-Cₙₘ telles que celle représentée sur la figure 6 qui comprend deux cadres rectangulaires horizontaux coaxiaux 2, 3 reliés par des fils verticaux 4 de manière à délimiter un volume parallélépipédique allongé dans le sens vertical, qui est destiné à recevoir une pluralité d'objets superposés, l'ensemble des cellules étant juxtaposé de manière à former un réseau maillé.

Sous la face inférieure de l'unité de stockage est disposée une unité de transfert T₁ (figure 1) qui occupe un volume plat de section horizontale sensiblement égale à celle de l'unité de stockage. Cette unité de transfert comprend un chariot CT₁, muni d'un godet G₁ destiné à recevoir un par un les objets stockés dans l'unité de stockage 1 et de les amener au poste de chargement O₁, O₂ d'un ou plusieurs transporteurs TR₁, TR₂.

Dans cet exemple, les transporteurs TR₁, TR₂ consistent en des circuits pneumatiques dont deux conduits tubulaires disposés côte à côte ont été représentés.

Comme on peut le voir sur la figure 10, ces conduits présentent une section rectangulaire avec des rainures longitudinales R₁ à R₄ dont les renflements sont tournés vers l'intérieur. Ces rainures R₁ à R₄ ont pour objet de limiter les frottements des objets transportés sur la paroi du tube et éviter l'apparition de charges électrostatiques. Ces conduits peuvent être réalisés par extrusion, soit en matière plastique, soit en métal.

Le chariot CT₁ (figure 1) est mobile dans le plan horizontal selon deux axes perpendiculaires, parallèles aux arêtes latérales de l'unité 1, grâce à une structure similaire à celle d'une table traçante XY faisant intervenir deux éléments de guidage latéraux parallèles (rails GL₁, GL₂) sur lesquels peut se déplacer en translation un élément de guidage transversal GT₁, le long duquel est guidé le chariot CT₁. Bien entendu, les déplacements de l'élément transversal GT₁ et du chariot CT₁ peuvent être commandés par deux moteurs pilotés par un processeur de manière à ce que le godet G₁ puisse être disposé au-dessous d'une cellule déterminée Cₙₘ, identifiée par une adresse.

Chaque cellule de stockage ou silo C₁₁, Cₙₘ comprend, dans sa partie inférieure, un dispositif de distribution permettant de retenir un empilage d'objets et de les libérer un par un sous l'effet d'une commande.

Il s'avère que lorsque les objets à stocker et à distribuer n'ont pas la même forme et/ou la même taille, il se pose un problème relativement complexe pour réaliser à la fois des cellules de stockage, des dispositifs de distribution et des circuits de transport pneumatiques, pouvant convenir pour toutes les formes et toutes les dimensions.

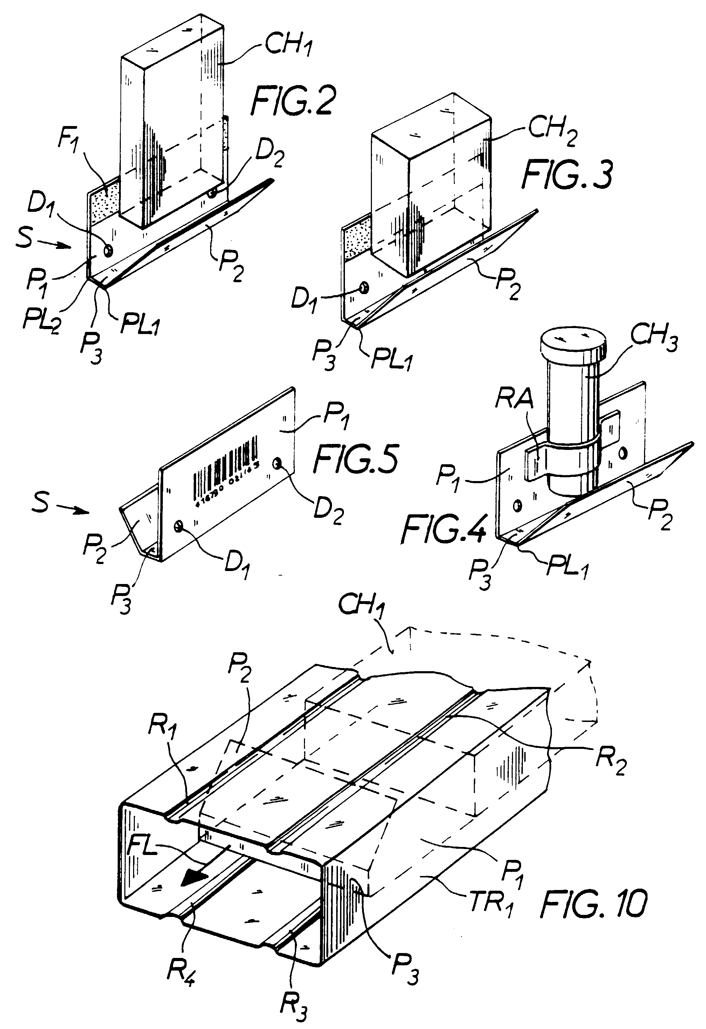

L'invention propose une solution particulièrement simple, peu coûteuse et cependant efficace, cette solution faisant intervenir, comme représenté sur les figures 2 à 5 :
- un support réalisé en un matériau semi-rigide, par exemple en carton S réalisé à partir d'une bande rectangulaire, de largeur sensiblement égale à celle de la section droite du conduit pneumatique des transporteurs TR₁, TR₂, cette bande étant repliée autour d'au moins une ligne de pliage transversale PL₁ de manière à obtenir une forme sensiblement diédrique dont une plage P₁ présente des moyens de fixation F₁ de l'objet, tandis que l'autre plage P₂ constitue un opercule à action autoclave qui vient en grande partie obturer le conduit pneumatique et assurer la propulsion de l'ensemble support S/objet CH₁ à CH₃ sous l'effet d'un courant de gaz circulant dans le conduit dans le sens de la flèche FL.

Dans l'exemple représenté sur les figures 2 et 3, l'objet présente une forme parallélépipédique et les moyens de fixation F₁ consistent en une couche adhésive protégée avant usage par un film de protection.

Dans l'exemple représenté figure 4, l'objet présente une forme cylindrique. Dans ce cas, cet objet peut être fixé sur la plage P1 par l'intermédiaire d'un ruban adhésif RA.

Dans tous ces exemples, le support S présente une même forme. Il comporte deux lignes de pliage transversales parallèles PL₁, PL₂ délimitant en plus des plages P₁, P₂ une plage intercalaire P₃ qui s'étend perpendiculairement à la plage P₁, la plage P₂ venant en retour obliquement par rapport aux deux plages P₁, P₂, en direction de l'objet CH₁, CH₂, CH₃. Ce double pliage, qui définit une forme diédrique tronquée, permet d'obtenir une meilleure adaptation à la forme des objets et une réduction de longueur de l'ensemble support/objet. En outre, elle se prête mieux à la superposition des objets à l'intérieur des cellules de stockage C₁₁, Cₙₘ.

Avantageusement, la plage P₁ pourra comprendre des moyens d'identification de l'objet, par exemple un code à barres inscrit sur la face de la plage opposée à l'objet ainsi que deux perçages D₁, D₂ utilisables par le distributeur un à un équipant chaque cellule.

Comme représenté sur les figures 7 et 8, ce distributeur fait intervenir un mécanisme d'échappement comportant un levier vertical LV basculant autour d'un axe horizontal parallèle au côté de la cellule correspondante contre laquelle vient en appui la plage P₁ du support.

Ce levier LV oscille entre deux positions angulaires fin de course et présente, à chacune de ses extrémités, une paire de broches parallèles B₁, B₂ sensiblement perpendiculaires au levier LV, à savoir :
- une paire de broches supérieures B₁ destinées à venir s'engager dans les perçages D₁, D₂ du support S qui présentent, à cet effet, un même écartement,
- une paire de broches inférieures B₂ servant de butée escamotable, qui sert à retenir les ensembles support S/objet CH₁ dans les cellules C₁₁, Cₙₘ, comme représenté figure 7.

A l'aide de ce distributeur, la distribution des objets CH équipés de leur support S s'effectue comme suit :

Initialement, les objets CH superposés dans les cellules C₁₁, Cₙₘ sont retenus par les broches inférieures B₂ (figure 7).

Lorsque l'utilisateur désire obtenir l'un de ces objets, il indique au processeur du système, par exemple grâce à une console écran/clavier, les données d'identification de l'objet. Le processeur provoque l'actionnement de l'unité de transfert inférieure de manière à placer le chariot CT₁ muni de son godet G₁ sous la cellule contenant l'objet désiré. Le processeur commande alors l'activation d'un actionneur AC prévu sur le chariot qui, en prenant appui sur une languette d'actionnement LA solidaire du levier LV, provoque le basculement du levier LV.

Au cours de ce basculement, la paire de broches B₁ s'engage dans les perçages de l'avant-dernier support S-1 de la pile, avant l'effacement total des broches inférieures B₂ qui provoque la chute du dernier support S muni de son objet dans le godet G₁.

L'actionneur AC revient à sa position initiale tandis que le levier LV (sollicité par un ressort) effectue un basculement en sens inverse au cours duquel :
- les broches B₂ se disposent en saillie sous la cellule C₁₁ pour jouer leur rôle de butée,
- les broches B₁ se rétractent en dehors des perçages D₁, D₂ de manière à libérer l'avant-dernier support S-1 qui tombe puis est retenu sur les broches B₂ ; le chariot CT₁ peut alors être déplacé en vue du transfert de l'objet jusqu'à l'orifice d'accès O₁, O₂ d'un transporteur pneumatique TR₁, TR₂.

Le transfert du support S équipé de son objet CH est ici obtenu grâce au fait que le godet G₁ a un fond escamotable FD.

Bien entendu, une fois dans le conduit tubulaire du transporteur TR_{1,} TR₂ (qui présente une section rectangulaire de même largeur que le support) les plages P₂ et P₃ jouent un rôle analogue à celui d'un piston coulissant avec étanchéité autoclave et assurent la propulsion de l'objet vers sa destination, sous l'effet d'une différence de pression.

Le porte-récepteur peut être éventuellement équipé d'un dispositif d'identification de l'utilisateur qui ne permet l'accès à l'objet reçu que si l'utilisateur est habilité à le recevoir.

Le stockage des ensembles supports-charges dans l'unité de stockage peut s'effectuer automatiquement à l'aide d'une unité de transfert T₂ (figure 1) du type de celle précédemment décrite, mais située au-dessus de l'unité de stockage 1. Cette unité de transfert T₂ comprend également un chariot CT₂ muni d'un godet G₂ destiné à recevoir les objets destinés à être stockés dans l'unité de stockage 1. Ce chariot CT₂ est mobile selon deux axes perpendiculaires grâce à une structure faisant intervenir deux éléments de guidage latéraux parallèles (rails GL'₁, GL'₂) sur lesquels peut se déplacer en translation un élément de guidage transversal GT₂ le long duquel est guidé le chariot CT₂. Ici également, les déplacements de l'élément transversal GT₂ et du chariot CT₂ peuvent être commandés par deux moteurs respectifs pilotés par le processeur de manière à ce que le godet puisse être disposé au-dessus d'une cellule déterminée C₁₁, Cₙₘ, identifiée par son adresse.

Le godet G₂ comprend alors un fond escamotable piloté par un actionneur porté par le chariot CT₂ de manière à laisser tomber l'ensemble support-objet dans la susdite cellule C₁₁, Cₙₘ.

Bien entendu, pour pouvoir effectuer le contrôle et la gestion automatisée du stockage et des transferts d'objets, le processeur devra être conçu de manière à prendre en compte des informations pouvant concerner les transactions (identité du demandeur, heure de la demande, heure d'exécution de la demande, heure de réception des objets) ou des défauts éventuels (nature du défaut, heure de la défaillance, heure de la remise en service). Ce processeur pourra être programmé de manière à effectuer une gestion dynamique des stocks et pour établir automatiquement les commandes de réapprovisionnement.

Grâce à ces dispositions, le système selon l'invention peut, dans le cadre de la pharmacie hospitalière, effectuer une gestion en temps réel et flux tendus.

Dans ce cas, le réseau pneumatique pourra relier la pharmacie aux salles de soins, et l'unité de stockage pourra assurer un stockage préalable, par unité de temps, des médicaments par malade, par salle de soins et par type de médicament. L'approvisionnement des salles de soins pourra être préparé à l'avance de manière à permettre la délivrance des unités de soins en temps réel. L'utilisation de batteries d'unités de stockage pourra permettre d'assurer la desserte des médicaments pendant les congés de fin de semaine ou les jours fériés.

A titre d'exemple, l'unité de stockage pourra occuper un volume global (meuble + mécanismes) de 5 à 8 m³ pour un volume utile de stockage de 4,8 m³, l'encombrement étant alors :

| | |
|---|---|
| largeur | 1,6 m |
| longueur | 2,5 m |
| hauteur | 1,5 m |

Cette unité de stockage est apte à stocker 500 types de médicaments et représente une capacité de stockage de 10 à 20 médicaments de chaque type.

Lorsqu'il est utilisé en officine, ce système permet une libération d'espace importante, une réduction tout aussi importante de personnel, un gain de temps appréciable et une réduction des risques d'erreur.

Ces différents facteurs permettent un retour sur investissement très avantageux.

## Revendications

1. Système pour le stockage et la distribution d'objets de formes et de dimensions variées,
caractérisé en ce qu'il fait intervenir :
- une unité de stockage (1) comprenant une pluralité de cellules verticales (C₁₁, Cₙₘ) servant de silos de stockage, dans lesquelles les objets peuvent être superposés, ces cellules (C₁₁, Cₙₘ) étant ouvertes dans leur partie supérieure et équipées chacune, dans leur partie inférieure, d'un système de distribution un à un (LV, B₁, B₂) commandable à distance,
- une unité de transfert (T₁), qui s'étend dans un volume situé en dessous de l'unité de stockage (1) et qui comprend un chariot (CT₁) mobile horizontalement selon deux axes perpendiculaires de manière à pouvoir se placer sous chacune des cellules de stockage (C₁₁, Cₙₘ), et dans une position de transfert, en regard d'un dispositif de transport (TR₁, TR₂) destiné à acheminer les objets jusqu'à un destinataire,
- des moyens (LA, AC) permettant de commander l'actionnement du système de distribution (LV, B₁, B₂) associé à une cellule (Cₙₘ), lorsque le chariot (CT₁) est placé au-dessous de cette cellule, de manière à pouvoir provoquer la chute d'un objet contenu dans cette cellule dans ledit chariot (CT₁),
- des moyens (FD) permettant de transférer l'objet porté par le chariot (CT₁) sur ou dans le susdit dispositif de transport (TR₁, TR₂) lorsque ledit chariot (CT₁) se trouve en position de transfert, à proximité dudit dispositif.

2. Système selon la revendication 1,
caractérisé en ce que les moyens (AC) permettant de commander l'actionnement des systèmes de distribution (LV, B₁, B₂) associés aux cellules (Cₙₘ) sont portés par le chariot (CT₁).

3. Système selon l'une des revendications 1 et 2,
caractérisé en ce que le susdit (CT₁) chariot comprend des moyens de transfert (FD) de l'objet (CH) qu'il supporte, sur ou dans le dispositif de transport (TR₁, TR₂).

4. Système selon l'une des revendications précédentes,
caractérisé en ce qu'il comprend, pour le chargement des cellules (C₁₁, Cₙₘ), une unité de transfert (T₂) qui s'étend dans un volume situé au-dessus de l'unité de stockage (1) et qui comprend un chariot (CT₂) mobile horizontalement de manière à pouvoir se placer au-dessus de chacune des cellules de stockage (C₁₁, Cₙₘ), ce chariot (CT₂) comportant des moyens permettant de transférer l'objet qu'il transporte dans une cellule (Cₙₘ) déterminée.

5. Système selon l'une des revendications précédentes,
caractérisé en ce que l'unité de stockage (1) est constituée par un réseau maillé en fils de fer délimitant une pluralité de cellules verticales (C₁₁, Cₙₘ) juxtaposées de section rectangulaire.

6. Système selon l'une des revendications précédentes,
caractérisé en ce que les susdites unités de transfert (T₁, T₂) comprennent deux éléments de guidage latéraux parallèles (GL₁, GL₂ - GL'₁, GL'₂) sur lesquels peut se déplacer en translation un élément de guidage transversal (GT₁, GT₂) le long duquel est guidé le susdit chariot (CT₁, CT₂).

7. Système selon la revendication 6,
caractérisé en ce que les déplacements de l'élément transversal (GT₁, GT₂) et du chariot (CT₁, CT₂) sont commandés par deux moteurs pilotés par un processeur de manière à ce qu'il puisse présenter l'objet qu'il contient au droit d'une cellule déterminée (Cₙₘ) identifiée par une adresse.

8. Système selon l'une des revendications précédentes,
caractérisé en ce que le susdit dispositif de transport est de type pneumatique et en ce que les susdits objets sont fixés sur un support (S) réalisé à partir d'une bande rectangulaire en une matière semi-rigide, de largeur sensiblement égale à celle de la section droite du conduit pneumatique des transporteurs (TR₁, TR₂), cette bande étant repliée autour d'au moins une ligne de pliage transversale (PL₁) de manière à obtenir une forme sensiblement diédrique dont une plage (P₁) présente des moyens de fixation (F₁) de l'objet, tandis que l'autre plage (P₂) constitue un opercule à action autoclave qui vient en grande partie obturer le conduit pneumatique et assurer la propulsion de l'ensemble support (S)/objet (CH₁ à CH₃) sous l'effet d'un courant de gaz circulant dans le conduit.

9. Système selon la revendication 8,
caractérisé en ce que la bande est repliée autour de deux lignes de pliage transversales (PL₁, PL₂) de manière à présenter une forme diédrique tronquée.

10. Système selon la revendication 8,
caractérisé en ce que la fixation des objets (CH₁, CH₂, CH₃) sur le support s'effectue grâce à une couche adhésive (F₁) portée par le support (S).

11. Système selon l'une des revendications 8 à 10,
caractérisé en ce que les supports (S) sont munis de moyens d'identification détectables à distance.

12. Système selon l'une des revendications 8 à 11,
caractérisé en ce que le distributeur associé à chaque cellule comprend un mécanisme d'échappement comportant un levier vertical basculant (LV) présentant dans sa partie supérieure une paire de broches (B₁) apte à pouvoir s'engager dans deux perçages respectifs (D₁, D₂) prévus sur les éléments de support (S) et, dans sa partie inférieure, des moyens (B₂) permettant de retenir les objets à l'intérieur de la susdite cellule (C₁₁, Cₙₘ) qui agissent en alternance avec lesdites broches (B₁).

13. Système selon la revendication 8,
caractérisé en ce que le conduit pneumatique (TR₁, TR₂) présente une section rectangulaire munie de rainures longitudinales (R₁ à R₄) dont les renflements sont tournés vers l'intérieur.
